# DEMANDE DE BREVET EUROPEEN

(11) **EP 1 995 009 A1**
(43) Date de publication de la demande: **26.11.2008**
(21) Numéro de dépôt: 07380318.1
(22) Date de dépôt: 13.11.2007
(51) Int. Cl.: B23C 1/12, B23Q 1/54, B23C 9/00

(54) **Tête pour fraiseuse**

(30) Priorité: 25.05.2007 ES 200701449
(71) Demandeur: Zayer, S.A., 01013 Vitoria Alava (ES)
(72) Inventeur: Calleja Martinez, Luis, 01013 Vitoria (Alava) (ES)
(74) Mandataire: Urizar Barandiaran, Miguel Angel

(57) **Abrégé**

Tête pour fraiseuse se composant d'un coude (2) qui tourne par rapport à la machine (3) et d'une tête porte-outil (1) qui tourne par rapport au coude (2), le blocage/déblocage aussi bien du coude (2) par rapport à la machine (3) que de la tête (1) par rapport au coude (2), étant réalisé avec des jeux de vis de serrage, sous l'action d'un système hydromécanique, les systèmes d'actionnement de la rotation du coude (2) et d'actionnement de la rotation de la tête (1) étant en boucle fermée.

## Description

Dans la technologie conventionnelle, on utilise une tête pour machine fraiseuse constituée par un coude qui tourne par rapport à la machine et une tête porte-outil, qui tourne par rapport au coude.

En combinant les deux rotations, il s'agit de parvenir au positionnement spatial voulu de l'outil (fraise) de travail.

Pour les têtes connues, il existe le problème consistant dans le fait que les positionnements automatiques du coude par rapport à la machine et de la tête porte-outil par rapport au coude sont discontinus (positionnements au moyen de couronnes dentées Hirth), ce qui a pour résultat l'impossibilité d'avoir un positionnement de l'axe de l'outil continue et, par conséquent, des carences importantes dans l'utilité, étant donné que très peu de combinaisons des deux rotations ont pour résultat des degrés angulaires exactes sur l'axe de l'outil.

La tête qui fait l'objet de l'invention surmonte le problème mentionné avec les dispositions suivantes :
a) le blocage/déblocage du coude par rapport à la machine et de la tête par rapport au coude est effectué avec des jeux de vis de serrage moyennant l'action d'un système hydromécanique, où chaque vis définit un corps qui joue le rôle de piston, un col qui sert de tige et une tête ayant une fonction de serrage/desserrage, les corps de ces vis étant disposés dans des orifices pratiqués dans la machine -ou dans le coude, le cas échéant-, les têtes étant logées dans un renfoncement circonférentiel pratiqué dans le coude -ou dans la tête, le cas échéant-.
b) Le système d'actionnement de la rotation de la tête est constitué par un moteur qui actionne une transmission à engrenages.

Le premier système d'actionnement est complété par un capteur de position direct.

Ces systèmes d'actionnement du coude et de la tête permettent d'assurer la position obtenue avec des rangs de 0,001 degré. La force exercée par le système de blocage est capable de supporter les efforts de fraisage de la tête à pleine puissance.

Pour mieux comprendre l'objet de la présente invention, on représente sur les plans une forme préférentielle de réalisation pratique, susceptible de changements accessoires qui n'en dénaturent pas le fondement.

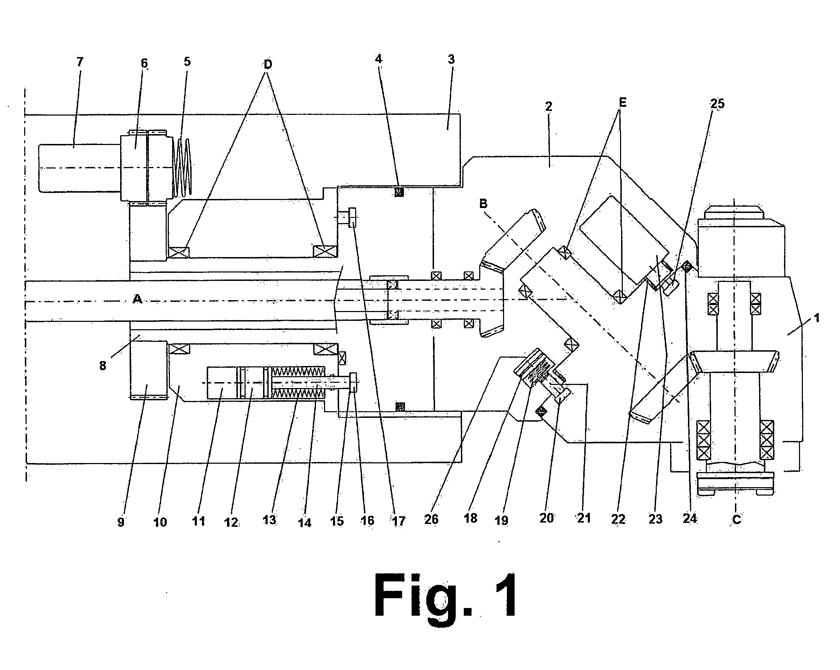

La figure 1 est une vue schématique d'une section longitudinale d'une réalisation pratique de la tête qui fait l'objet de l'invention, dans laquelle on observe le système d'actionnement de la tête (1) et de ses éléments de blocage/déblocage par rapport au coude (2), ainsi que leurs systèmes respectifs d'actionnement du coude (2) et éléments de blocage/déblocage par rapport à la machine (3).

On décrit ci-dessous un exemple de réalisation pratique, non limitative, de la présente invention.

La tête se compose de deux parties, un coude (2) et une tête (1) où vient se loger la broche porte-outils.

Le coude (2), pour son positionnement, tourne autour de l'axe A, tandis que la tête (1) le fait autour de l'axe B.

Le positionnement dans l'espace de l'axe où s'accouple l'outil de fraisage (axe C) est obtenu grâce au positionnement dans certains angles de la tête (1) et du coude (2).

Pour obtenir un positionnement utilisable de la broche porte-outils (axe C), il faut que le positionnement de la tête (1) et du coude (2) se fasse sans échelons, autrement dit que les accroissements du positionnement possibles soient dans un rang aussi petit que possible (dans la tête faisant l'objet de l'invention, une précision de 0,001 degré est obtenue).

Comme on l'observe sur la représentation schématique de la figure 1, le coude (2) est uni à un chariot ou composant de la machine-outil (3) et tourne autour de l'axe A. Pour la rotation et le contrôle, aussi bien axial que radial, du coude (2), on utilise les roulements D, des douilles ou des coussinets pouvant également être employés, sans altérer pour cela l'essence de l'invention.

Le système d'actionnement permettant d'obtenir la rotation du coude (2) par rapport à la machine (3) est un servosystème en boucle fermée composé d'un moteur d'actionnement (7) et d'un système de mesure ou capteur de position direct (4). La commande du servosystème peut s'effectuer au moyen d'un Contrôle Numérique, d'un PLC ou moyennant des cartes électroniques de régulation et de contrôle du positionnement.

L'actionnement permettant la rotation est réalisé au moyen du moteur indépendant (7) cité, uni à un jeu d'engrenages cylindriques (6) à denture hélicoïdale, qui transmettent le mouvement par l'intermédiaire d'un engrenage (9) assemblé solidairement à l'ensemble de l'arbre de rotation (8), qui est uni, à son tour, au coude (2).

Les jeux d'engrenages (6) mentionnés sont préchargés sous l'action d'un ressort coaxial (5), afin de compenser continuellement des usures, les sauts, les surefforts ou les discontinuités quels qu'ils soient.

Le moteur (7) peut être électrique ou hydraulique, sans altérer pour cela l'essence de l'invention.

La mesure de la positions de la rotation du coude (2) est directement obtenue au moyen d'un encodeur (4).

Une fois le positionnement du coude (2) obtenu, celui-ci est bloqué et fixé au chariot ou au composant de la machine-outil (3) grâce à la pression exercée par le coude (2) sur l'élément (10) de référence, qui est logé dans le chariot ou le composant de la machine (3)

L'élément (10) peut être le chariot ou le composant lui-même de la machine (3).

La force de blocage entre le coude (2) et l'élément de référence (10) est obtenue soit grâce à la pression hydraulique, soit en utilisant des ressorts ou en utilisant les deux moyens en même temps.

Dans l'exemple de réalisation (représenté en détail sur la figure 1), on observe le positionnement du coude (2) para rapport au chariot ou au composant de la machine-outil (3), (10) et comment celui-là est bloqué dans celui-ci. Pour simplifier, on n'en a représenté qu'un, quoiqu'il y ait plusieurs jeux similaires disposés circonférentiellement.

Selon l'exemple de réalisation représenté sur la figure 1, pour obtenir cette force de blocage, on a pratiqué dans le coude (2) un renfoncement circonférentiel (17) et dans le composant -machine-outil (3) ou l'élément de référence (10), qui y est logé- des orifices (11) disposés circonférentiellement.

Dans ledit renfoncement circonférentiel (17), on trouve les têtes (16) de plusieurs vis (14) de serrage avec le corps (12) qui joue le rôle de piston, le collet (14) qui sert de tige et la tête (16) qui a une fonction de serrage/desserrage; les corps (12) de ces vis (14) étant situés dans les orifices borgnes (11) mentionnés, disposés circonférentiellement. On dispose également des ressorts à assiettes (13) logés dans ces orifices (11) de part et d'autre du col (14) de la vis correspondante et exerçant une pression sur le corps (10) et la paroi opposée.

Le coude (2) est bloqué/serré contre l'élément/composant (10) de référence sous l'action exercée par ces têtes (16) grâce à la pression hydraulique qui est exercée sur une face du piston (12) et par les ressorts à assiettes (13). Le déblocage permettant la rotation libre du coude (2) est obtenu en annulant la force de blocage précédente et en générant une force dans le sens contraire, grâce à la pression hydraulique exercée sur l'autre face du piston (12), de façon à obtenir un jeu des têtes (16), des vis (14) dans leur logement (17) dans le coude (2) et à permettre la rotation libre de ce coude (2).

Dans l'exemple de réalisation (représenté en détail sur la figure 1), on observe le positionnement de la tête (1) par rapport au coude (2) et comment celle-là demeure bloquée dans celui-ci.

La tête (1) est unie au coude (2) et tourne autour de l'axe B. Pour la rotation, le contrôle axial et et radial, on utilise les roulements E, des douilles ou des coussinets pouvant également être utilisés.

Le système d'actionnement est un servosystème en boucle fermé, composé d'un moteur d'actionnement (23) et d'un système de mesure. Le contrôle du servosystème peut être assuré au moyen d'un Contrôle Numérique, d'un PLC ou au moyen de cartes électroniques de régulation et de contrôle du positionnement.

L'actionnement permettant la rotation s'effectue au moyen du moteur indépendant (23) mentionné et d'une transmission à engrenages (22), qui constituent une chaîne cinématique, chaîne qui transmet le mouvement à l'axe B, qui est uni solidairement à la tête (1). Cet actionnement peut également être obtenu en utilisant alternativement des courroies dentées ou une chaîne.

Le moteur (23) peut être électrique ou hydraulique, sans altérer pour cela l'essence de l'invention.

La mesure de la position de la rotation de la tête (1) est directement obtenue à partir d'un encodeur (24).

Une fois le position de la tête (1) obtenu, celle-ci est bloquée et fixée au coude (2) moyennant la pression exercée par la tête (1) sur le coudre (2), de façon similaire à celle décrite ci-dessus pour fixer le coude (2) et l'élément (10) de référence de la machine-outil (3). La force de blocage est obtenue soit moyennant la pression hydraulique, soit en utilisant des ressorts ou en utilisant les deux moyens en même temps.

Dans l'exemple de réalisation (représenté en détail sur la figure 1), on observe le positionnement de la tête (1) par rapport au coude (2) et comment celle-là (1) est bloquée dans celui-ci (2) au moyen de plusieurs jeux de cylindres (18) (19) (20) disposés circonférentiellement. Dans un but de simplification, seul un a été représenté, quoiqu'il y ait plusieurs jeux similaires disposés circonférentiellement.

Selon l'exemple de réalisation représenté sur la figure 1, pour obtenir cette force de blocage, un renfoncement circonférentiel (25) a été pratiqué dans la tête (1) et des orifices borgnes (26) dans le coude (2), disposés circonférentiellement.

Dans ledit renfoncement circonférentiel (25), on trouve les têtes (20) de plusieurs vis de serrage avec le corps (18) qui joue le rôle de piston, les corps (18) de ces vis étant situés dans lesdits orifices borgnes (26) du coude (2), disposés circonférentiellement. On dispose également des ressorts à assiettes (19) de part et d'autre du col (21) de la vis correspondante qui viennent se loger dans ces orifices borgnes (26) du coude (2) en exerçant une pression sur le corps (18) et la paroi opposée.

La tête (1) se bloque/se serre contre le coude (2), du fait de la force exercée par les vis (20), grâce à la pression hydraulique qui la fait agir sur le piston (18) et aux ressorts à assiettes (19). Le déblocage permettant la rotation libre de la tête (1) est obtenu en annulant la force de blocage antérieur et en générant une force dans le sens contraire, au moyen de la pression hydraulique exercée sur l'autre face du piston (18), de façon à obtenir un jeu des têtes (20), des vis (21) dans leur logement sur la tête (1) et il permet la rotation libre de cette tête (1).

On comprend aisément que, sans altérer l'essence de l'invention, pour le blocage/déblocage aussi bien du coude (2) para rapport à la machine (3), (10) que de la tête (1) par rapport au coude (2), on peut inverser les termes en disposant les renfoncements (17), (25) et les têtes (16), (20) des vis de serrage, respectivement :
- sur la machine (10) au lieu de sur le coude (2), en ce qui concerne l'axe A et/ou
- sur le coude (2) au lieu de sur la tête (1), en ce qui concerne l'axe B.

Est également compris dans l'objet de l'invention le remplacement des orifices borgnes (11), (26) situés sur les corps (12), (18) des vis de serrage par un renfoncement circonférentiel (11'), (21') pratiqué de façon qu'au lieu de vis indépendantes, on utilise un élément continu annulaire (16'), (20').

## Revendications

1. Tête pour fraiseuse, de celles qui se composent d'un coude (2) qui tourne para rapport à la machine (3) et d'une tête porte-outils (1) qui tourne par rapport au coude (2); **se caractérisant par le fait que** :
a) le blocage/déblocage aussi bien du coude (2) par rapport à la machine (3) que de la tête (1) par rapport au coude (2) a lieu avec des jeux de vis de serrage sous l'action d'un système hydromécanique ;
b) Le système d'actionnement de la rotation du coude (2) est un système en boucle fermée, constitué par un moteur indépendant (7) qui actionne une transmission à engrenages (6) et qui dispose d'un capteur de position direct (4) ;
c) le système d'actionnement de la rotation de la tête (1) est un système en boucle fermée, constitué par un moteur indépendant (23), qui actionne une transmission à engrenages (22) et qui dispose d'un capteur de position direct (24).

2. Tête pour fraiseuse, selon la revendication antérieure, **se caractérisant par le fait que** chaque jeu de vis et le système hydromécanique pour le blocage/déblocage du coude (2) para rapport à la machine (3) sont constitués par :
- un renfoncement circonférentiel (17) dans le coude (2);
- des orifices (11) dans la machine-outil (3) ou le composant (10) qui y est logé ;
- des vis de serrage, dont les têtes (16) sont situées sur le renfoncement circonférentiel (17) et dont les corps (12) jouent le rôle de piston dans l'orifice borgne (11) correspondant ;
- des ressorts à assiettes (13) logés dans ces orifices (11) de part et d'autre du col (14) de la vis correspondante et exerçant une pression sur la machine/composant (3), (10) et la paroi opposée.

3. Tête pour fraiseuse, selon la revendication 1, **se caractérisant par le fait que** chaque jeu de vis et le système hydromécanique pour le blocage/déblocage de la tête (1) par rapport au coude (2) sont constitués par :
- un renfoncement circonférentiel (25) dans la tête (1) ;
- des orifices (21) dans le coude (2) ;
- des vis de serrage dont les têtes (20) sont situées dans le renfoncement circonférentiel (25) et dont les corps (18) jouent le rôle de piston dans l'orifice borgne (21) correspondant ;
- des ressorts à assiettes (19) logés dans ces orifices (21) de part et d'autre du col (21) de la vis correspondante et exerçant une pression sur le coude (2) et la paroi opposée.

4. Tête pour fraiseuse, selon les revendications 1 et 2, **se caractérisant par le fait que** chaque jeu de vis et le système hydromécanique pour le blocage/déblocage du coude (2) par rapport à la machine (3) sont constitués par :
- un renfoncement circonférentiel (17) dans le coude (2) ;
- un renfoncement circonférentiel dans la machine-outil (3) ou le composant (10) qui y est logé ;
- un élément continu annulaire (16') qui est situé sur le renfoncement circonférentiel (17) et dont le corps joue le rôle de piston dans le renfoncement circonférentiel (11').

5. Tête pour fraiseuse, selon les revendications 1 et 3, **se caractérisant par le fait que** chaque jeu de vis et le système hydromécanique pour le blocage/déblocage de la tête (1) par rapport au coude (2) sont constitués par :
- un renfoncement circonférentiel (25) dans la tête (1) ;
- un renfoncement circonférentiel (21') dans le coude (2) ;
- un élément continu annulaire (20') qui est situé sur le renfoncement circonférentiel (25) et dont le corps joue le rôle de piston dans le renfoncement circonférentiel (21') correspondant.

6. Tête pour fraiseuse, selon les revendications antérieures, **se caractérisant par le fait que** les engrenages de ladite transmission (6) sont des engrenages cylindriques à denture hélicoïdale préchargés sous l'action d'un ressort coaxial (5) qui compense constamment les usures, les sauts, les surefforts et/ou les discontinuités quels qu'ils soient.

7. Tête pour fraiseuse, selon les revendications antérieures, **se caractérisant par le fait que** chaque capteur de position direct (4), (24) cité est un encodeur.
